# EUROPÄISCHE PATENTSCHRIFT

(11) **EP 1 638 829 B1**
(45) Veröffentlichungstag und Bekanntmachung des Hinweises auf die Patenterteilung: **10.01.2007**
(21) Anmeldenummer: 04741693.8
(22) Anmeldetag: 01.06.2004
(51) Int. Cl.: B60T 8/88

(54) **VERFAHREN UND ANORDNUNG ZUR UNTERDR CKUNG VON FALSCHMELDUNGE N IN BERWACHUNGSSYSTEMEN**
METHOD AND ARRANGEMENT FOR ELIMINATING FALSE MESSAGES IN MONITORING SYSTEMS
PROCEDE ET DISPOSITIF PERMETTANT DE SUPPRIMER LES FAUSSES ALERTES DANS DES SYSTEMES DE SURVEILLANCE

(30) Priorität: 30.06.2003 DE 10329512
(43) Veröffentlichungstag der Anmeldung: 29.03.2006
(73) Patentinhaber: SIEMENS AKTIENGESELLSCHAFT, 80506 München (DE)
(72) Erfinder: SCHMID, Dietmar, 65606 Villmar (DE); SKORUPA, Raphael, 61348 Bad Homburg (DE)
(86) Internationale Anmeldenummer: PCT/EP2004/050980
(87) Internationale Veröffentlichungsnummer: WO 2005/000653

(56) Entgegenhaltungen:
- EP-A- 0 577 045
- WO-A-03/039929
- US-A- 5 867 091

## Beschreibung

Die Erfindung betrifft ein Verfahren und eine Anordnung zur Unterdrückung von Falschmeldungen in Überwachungssystemen für elektronische Geräte, insbesondere für Sensorschaltungen für Kraftfahrzeuge.

Aus Sicherheitsgründen werden häufig Überwachungssysteme für elektronische Geräte eingesetzt, bei denen eine durch einen Fehler im Gerät verursachte falsche Ausgangsgröße Gefahren hervorrufen kann. So muss vermieden werden, dass durch Fehler in Sensorschaltungen für Kraftfahrzeuge gefährliche Fahrsituationen entstehen, beispielsweise wenn ein Drehratensensor eine hohe Drehrate meldet, während das Fahrzeug seinen Kurs beibehält. Es können jedoch auch Gefahren mindestens jedoch Betriebsstörungen durch Falschmeldungen auftreten. Ursachen für Falschmeldungen können beispielsweise kurzzeitige Störungen - insbesondere Spannungsspitzen - sein, die von Überwachungssystemen als Fehler gedeutet werden, ohne dass sie zu einer Verfälschung der Ausgangsgröße des Gerätes führen.

Bei einem Verfahren und einer Vorrichtung zur Behandlung von Fehlerverdacht gemäß WO03/039929 A1 ist daher eine Inkrementierung eines Zählers vorgesehen, wobei bei Überschreiten verschiedener Schwellwerte verschiedene Maßnahmen ergriffen werden. Der Zähler kann bei Ausbleiben eines Fehlerverdachtes auf Null gesetzt oder dekrementiert werden.

Bei sicherheitsrelevanten Geräten muss häufig sehr schnell auf eine Fehlermeldung reagiert werden. Die Prüfung der Fehlermeldungen kann jedoch bei mehreren zu überwachenden Eingangsgrößen, bedingt durch die endliche Laufzeit des Programms im Prozessor, länger als zulässig dauern. Dies gilt insbesondere dann, wenn zur Vermeidung von Falschmeldungen mehrere Inkrementierungen bis zum Erreichen des vorgegebenen Zählerstandes erforderlich sind.

Aufgabe der vorliegenden Erfindung ist es, Falschmeldungen weitgehend zu verhindern, so dass möglichst nur echte Fehler zu einem Alarm führen, der dann angezeigt oder zum Ignorieren der Ausgangsgröße einem übergeordneten System zugeführt werden kann, und bei mehreren Eingangsgrößen eine schnelle A-larmauslösung zu gewährleisten.

Diese Aufgabe wird erfindungsgemäß durch ein verfahren gemäß anspruch 1 und eine anordnug gemäß anspruch 7 gelöst.

Durch die Erfindung wird erreicht, dass die Überwachung einer Größe, die bereits durch eine Fehlermeldung aufgefallen ist, zeitlich bevorzugt erfolgt.

Durch eine Weiterbildung des Verfahrens, bei der vorgesehen ist, dass die Größe der Inkremente und gegebenenfalls der Dekremente und der vorgegebene Zählerstand vorwählbar sind, kann die Auslösung eines Alarms individuell an die Art der jeweiligen Fehlermeldung angepasst werden. Diese Weiterbildung wird vorzugsweise dadurch realisiert, dass die vorwählbaren Größen beim Einschalten des Gerätes aus einem nichtflüchtigen Speicher ausgelesen werden.

Bei den zu überwachenden Geräten ist es in der Regel zweckmäßig, mehrere Größen - im folgenden in Bezug auf das erfindungsgemäße Verfahren Eingangsgrößen genannt - zu überwachen. Dazu ist bei dem erfindungsgemäßen Verfahren vorgesehen, dass von mehreren zu überwachenden Eingangsgrößen Fehlermeldungen abgeleitet werden, die je einen Zähler inkrementieren, und dass für jede der zu überwachenden Eingangsgrößen die Größe der Inkremente und gegebenenfalls der Dekremente, der vorgegebene Zählerstand und Grenzwerte der jeweils zu überwachenden Größe vorwählbar sind.

Liegen mehrere solcher Fehlermeldungen vor, wird vorzugsweise die weitere Überprüfung derart erfolgen, dass bei Vorliegen von Fehlermeldungen für mehrere Eingangsgrößen die vorzeitige weitere Prüfung dieser Eingangsgrößen nach einer zuvor festgelegten Prioritätenliste erfolgt.

Die Erfindung lässt zahlreiche Ausführungsformen zu. Eine davon ist schematisch in der Zeichnung anhand mehrerer Figuren dargestellt und nachfolgend beschrieben. Es zeigt:
- Figur 1: ein Blockdiagramm des Ausführungsbeispiels,
- Figur 2: Zeitdiagramme verschiedener Signale, bei dem in Fig. 1 dargestellten Blockdiagramm und
- Figur 3: ein Flussdiagramm eines das erfindungsgemäße Verfahren ausführenden Programms.

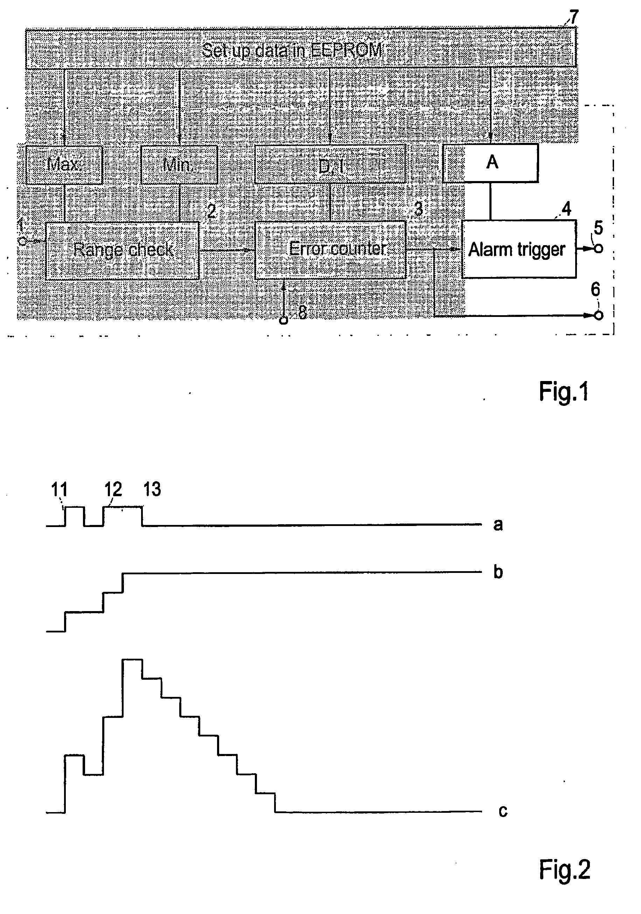

Die Anordnung nach Figur 1 ist der Einfachheit halber nur für eine zu überwachende Eingangsgröße dargestellt, die an einem Eingang 1 anliegt. Zunächst erfolgt bei 2 eine Prüfung, ob die Eingangsgröße in einem zulässigen Bereich zwischen Min und Max liegt. Ist dieses nicht der Fall, wird eine Fehlermeldung an einen Fehlerzähler 3 - im Folgenden auch einfach Zähler genannt - weitergeleitet. Bei Vorliegen einer Fehlermeldung wird der Zähler 3 um ein Inkrement I heraufgesetzt, das als Anzahl von Zählschritten vorgegeben ist. Liegt in dem jeweiligen Zeitabschnitt (Programmdurchlauf) keine Fehlermeldung vor, wird der Zähler 3 um ein Dekrement D herabgesetzt, das ebenfalls als Zahl von Zählerschritten vorgegeben ist. Erreicht der Zählerstand einen vorgegebenen Schwellwert A, wird in einem Alarmauslöser 4 ein Alarm ausgelöst und über einen Ausgang 5 abgegeben. Über einen Überwachungsausgang 6 kann der jeweilige Zählerstand ausgelesen werden.

Beim Einschalten des Gerätes werden aus einem EEPROM 7 die vorgegebenen Werte ausgelesen, nämlich der maximal und der minimal zulässige Wert Max, Min des Eingangssignals, die Zahl der Zählschritte I und D sowie der Schwellwert A. Ferner wird über einen Eingang 8 der Zähler 3 zurückgesetzt. Der gestrichelt umrandete Teil der Figur 1 ist jeweils einmal für eine Eingangsgröße vorhanden und ist vorzugsweise durch ein Programm für einen Prozessor realisiert, wobei die vorgegebenen Größen individuell für jede Eingangsgröße im EEPROM 7 abgelegt und beim Einschalten in den Arbeitsspeicher des Prozessors geladen werden. Die Ausgänge 5, 6, die den Alarmauslösern für die verschiedenen Eingangsgrößen zugeordnet sind, können in geeigneter Weise zusammengefasst werden.

Mit den Schwellwerten kann der Alarm bei Überschreitung bestimmter zu überwachender Eingangsgrößen gezielt unterdrückt werden, indem für diese Eingangsgrößen der Schwellwert auf "0" gesetzt wird. Diese Schwellwertangabe wird als Kommando interpretiert, mit dem die entsprechend ausgelegten Alarmauslöser blockiert werden. Der Fehlerzähler zur Prüfung dieser Eingangsgrößen hat somit keine Auswirkung mehr auf das Auslösen des Alarms.

Figur 2 stellt in Zeile a einen beispielhaften Verlauf der Ausgangsgröße der Bereichsprüfung 2 dar. Als Beispiel sei angenommen, dass nach einer fehlerfreien Zeit eine Fehlermeldung 11 auftritt, dann wiederum ein Zeitabschnitt ohne Fehler und dann zwei Fehlermeldungen 12, 13 hintereinander.

Zeile b stellt den Verlauf des Zählerstandes dar für den Fall, dass jeweils eine Fehlermeldung 11, 12, 13 den Zähler um einen Zählschritt inkrementiert und dass die Dekrementierung im Falle der Abwesenheit einer Fehlermeldung auf D=0 gesetzt ist. Bei dieser Einstellung werden also keine Fehlermeldungen wieder "vergessen", so dass die absolute Zahl der Fehlermeldungen bis zum nächsten Rücksetzen (Einschalten des Gerätes bzw. Ausschalten) gespeichert bleiben. Ist also bei dem in Figur 2b dargestellten Fall der Schwellwert auf 3 gesetzt, wird aufgrund der Fehlermeldung 13 ein Alarm ausgelöst.

Figur 2c bezieht sich wiederum auf das Auftreten von Fehlermeldungen gemäß Figur 2a, I ist jedoch auf 3 und D auf 1 gesetzt. Durch dicht aufeinanderfolgend auftretende Fehlermeldungen geht der Zählerstand schnell in die Höhe, bei Ausbleiben von Fehlermeldungen fällt er langsamer. Damit führen Häufungen von Fehlermeldungen zu einem Alarm, wenn der Schwellwert A größer als D eingestellt ist.

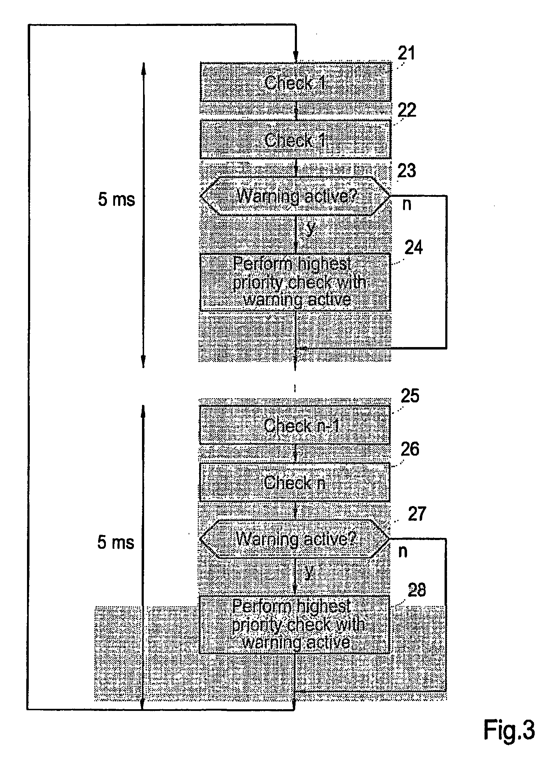

Das in Figur 3 ausschnittsweise dargestellte Programm durchläuft eine Schleife, während der alle Eingangsgrößen von 1 bis n geprüft werden. In den Programmschritten 21, 22 werden die ersten beiden Eingangsgrößen geprüft, der jeweilige Zähler in- bzw. dekrementiert und der Zählerstand mit dem zugehörigen Schwellwert A verglichen. Danach wird abgefragt, ob eine der Eingangsgrößen durch Über- bzw. Unterschreiten der Grenzwerte Max bzw. Min (Figur 1) den Zähler 3 inkrementiert hat, was als Warnung angesehen wird. Ist dies nicht der Fall, wird nach der Verzweigung 23 das Programm mit der Prüfung weiterer Eingangsgrößen fortgesetzt. Liegt jedoch mindestens eine Warnung vor, so werden die betroffenen Eingangsgrößen im Programmteil 24 erneut geprüft. Dies geschieht nach einer zuvor festgelegten Prioritätenfolge.

Falls bei einer der Prüfungen 21, 22, 24 das Erreichen der Alarmschwelle A festgestellt wird, wird ein Alarm ausgelöst, was in Figur 3 der Übersichtlichkeit halber im Einzelnen nicht dargestellt ist. Die letzten beiden Eingangsgrößen (n-1) und n werden bei 25 und 26 geprüft, worauf wiederum eine Verzweigung in Abhängigkeit davon erfolgt, ob diese Eingangsgrößen zu einer Warnung geführt haben. Ist dies der Fall, werden bei 28 die betroffenen Eingangsgrößen erneut geprüft. Danach wird das Programm beginnend mit 21 wiederholt.

Die beschriebene Prüfung von zwei Eingangsgrößen einschließlich der sofortigen weiteren Prüfung bei 24 benötigt bei einem praktisch ausgeführten Programm etwa 5 ms. Wird eine maximale Reaktionszeit für eine Fehlermeldung von 25 ms zugestanden, so können zehn Eingangsgrößen geprüft werden. Je nach Anforderungen im Einzelnen kann die Reihenfolge der Prüfungen auch geändert werden. So können beispielsweise drei oder mehr Eingangsgrößen geprüft werden, bevor auf eine sofortige weitere Prüfung derjenigen Eingangsgrößen übergegangen wird, für die eine Warnung aktiv ist. In anderen Fällen kann auch vorgesehen sein, dass nach Überprüfung jeder Eingangsgröße entschieden wird, ob diese unmittelbar danach nochmals geprüft werden soll.

## Patentansprüche

1. Verfahren zur Unterdrückung von Falschmeldungen in Überwachungssystemen für elektronische Geräte, insbesondere für Sensorschaltungen für Kraftfahrzeuge, wobei Fehlermeldungen (11, 12, 13) je einen Zähler (3) inkrementieren und ein Alarm erst bei Erreichen eines vorgegebenen Zählerstandes ausgelöst wird, **dadurch gekennzeichnet, dass** mit Hilfe eines auf einem Prozessor laufenden Programms Fehlermeldungen (11, 12, 13) abgeleitet werden, wenn eine der zu überwachenden Eingangsgrößen jeweils für sie vorgegebene Grenzwerte (Max, Min) überschreitet, dass durch die Fehlermeldungen (11, 12, 13) der jeweilige Zähler (3) inkrementiert wird, dass der Zählerstand daraufhin überprüft wird, ob mindestens eine Fehlermeldung vorliegt, und dass zutreffendenfalls für die betroffene Eingangsgröße vorzeitig eine weitere Prüfung erfolgt.

2. Verfahren nach Anspruch 1, **dadurch gekennzeichnet, dass** der Zähler (3) nach Zeitabschnitten ohne Fehlermeldung dekrementiert wird.

3. Verfahren nach einem der Ansprüche 1 oder 2, **dadurch gekennzeichnet, dass** die Größe der Inkremente (I) und gegebenenfalls der Dekremente (D) und der vorgegebene Zählerstand vorwählbar sind.

4. Verfahren nach Anspruch 3, **dadurch gekennzeichnet, dass** die vorwählbaren Größen beim Einschalten des Gerätes aus einem nichtflüchtigen Speicher (7) ausgelesen werden.

5. Verfahren nach einem der vorhergehenden Ansprüche, **dadurch gekennzeichnet, dass** von den zu überwachenden Eingangsgrößen Fehlermeldungen (11, 12, 13) abgeleitet werden, die je einen Zähler (3) inkrementieren, und dass für jede der zu überwachenden Eingangsgrößen die Größe der Inkremente (I) und gegebenenfalls der Dekremente (D), der vorgegebene Zählerstand und Grenzwerte (Max, Min) der jeweils zu überwachenden Größe vorwählbar sind.

6. Verfahren nach einem der vorhergehenden Ansprüche, **dadurch gekennzeichnet, dass** bei Vorliegen von Fehlermeldungen (11, 12, 13) für mehrere Eingangsgrößen die vorzeitige weitere Prüfung dieser Eingangsgrößen nach einer zuvor festgelegten Prioritätenliste erfolgt.

7. Anordnung zur Unterdrückung von Falschmeldungen in Überwachungssystemen für elektronische Geräte, insbesondere für Sensorschaltungen für Kraftfahrzeuge, wobei die Anordnung Zähler (3) aufweist, die derart ausgestattet sind, dass Fehlmeldungen je einen Zähler (3) inkrementieren, wobei die Anordnung einen Alarmauslöser (4) aufweist, der derart ausgestattet ist, dass ein Alarm erst ausgelöst wird, wenn mindestens einer der Zähler (3) einen jeweils vorgegebenen Zählerstand erreicht, **dadurch gekennzeichnet, dass** die Anordnung einen Mikroprozessor aufweist, in dem ein Programm lauffähig ist, mit welchem Fehlermeldungen (11, 12, 13) abgeleitet werden, wenn eine der zu überwachenden Eingangsgrößen jeweils für sie vorgegebene Grenzwerte (Max, Min) überschreitet, wobei durch die Fehlermeldungen (11, 12, 13) der jeweilige Zähler (3) inkrementiert wird, wobei der Zählerstand daraufhin überprüft wird, ob mindestens eine Fehlermeldung vorliegt, und wobei zutreffendenfalls für die betroffene Eingangsgröße vorzeitig eine weitere Prüfung erfolgt.

## Claims

1. Method for suppressing incorrect messages in monitoring systems for electronic devices, in particular for sensor circuits for motor vehicles, fault messages (11, 12, 13) each incrementing a counter (3), and an alarm not being triggered until a predefined counter reading is reached **characterized in that** fault messages (11, 12, 13) are derived using a program running on a processor if one of the input variables to be monitored exceeds respective limiting values (max, min) which are predefined for it, **in that** the respective counter (3) is incremented by the fault messages (11, 12, 13), **in that** the counter reading is checked to determine whether at least one fault message is present, and **in that**, if this is the case, a further check is carried out in advance for the relevant input variable.

2. Method according to Claim 1, **characterized in that** the counter (3) is decremented according to time periods without a fault message.

3. Method according to one of Claims 1 or 2, **characterized in that** the size of the increments (I) and, if appropriate, of the decrements (D) and the predefined counter reading are preselectable.

4. Method according to Claim 3, **characterized in that** the preselectable variables are read out from a nonvolatile memory (7) when the device is switched on.

5. Method according to one of the preceding claims, **characterized in that** fault messages (11, 12, 13) which each increment a counter (3) are derived from the input variables to be monitored, and **in that** the size of the increments (I) and, if appropriate, the decrements (D), the predefined counter reading and limiting values (max, min) of the variable to be respectively monitored are preselectable for each of the input variables to be monitored.

6. Method according to one of the preceding claims, **characterized in that**, when fault messages (11, 12, 13) are present for a plurality of input variables, the advance further checking of these input variables is carried out according to a previously defined priority list.

7. Arrangement for suppressing incorrect messages in monitoring systems for electronic devices, in particular for sensor circuits for motor vehicles, the arrangement having counters (3) which are equipped such that fault messages each increment a counter (3), the arrangement having an alarm trigger (4) which is equipped such that an alarm is not triggered until at least one of the counters (3) reaches a respectively predefined counter reading, **characterized in that** the arrangement has a microprocessor in which it is possible to run a program with which fault messages (11, 12, 13) are derived if one of the input variables to be monitored exceeds respective limiting values (max, min) which are predefined for it, the respective counter (3) being incremented by the incorrect messages (11, 12, 13), the counter reading being checked to determine whether at least one fault message is present, and, if this is the case, a further check being carried out in advance for the relevant input variable.

## Revendications

1. Procédé permettant de supprimer les fausses alertes dans des systèmes de surveillance pour appareils électroniques, notamment pour les circuits comportant des capteurs dans les véhicules automobiles, chaque message d'erreur (11, 12, 13) incrémentant un compteur (3) et une alarme n'étant déclenchée que lorsqu'une position donnée du compteur est atteinte, **caractérisé par le fait que**, avec l'aide d'un programme tournant sur un processeur, des messages d'erreur (11, 12, 13) sont déduits lorsque l'une des grandeurs d'entrée à surveiller dépasse des valeurs limites (Max, Min) données spécialement pour chacune d'elles, que, en raison des messages d'erreur (11, 12, 13), le compteur (3) respectif est incrémenté, que la position du compteur est contrôlée quant à la présence d'au moins un message d'erreur et que, dans ce cas, un nouveau contrôle de la grandeur d'entrée concernée est effectué d'une façon anticipée.

2. Procédé selon la revendication 1, **caractérisé par le fait que** le compteur (3) est décrémenté après des périodes de temps sans message d'erreur.

3. Procédé selon l'une des revendications 1 ou 2, **caractérisé par le fait que** la valeur des incréments (I) et, le cas échéant, la valeur des décréments (D) et la position donnée du compteur peuvent être présélectionnées.

4. Procédé selon la revendication 3, **caractérisé par le fait que** les valeurs pouvant être présélectionnées sont lues, à la mise en marche de l'appareil, sur une mémoire non volatile (7).

5. Procédé selon l'une des revendications précédentes, **caractérisé par le fait que**, à partir des grandeurs d'entrée à surveiller, sont déduits des messages d'erreur (11, 12, 13), qui incrémentent chacun un compteur (3) et que, pour chacune des grandeurs d'entrée à surveiller, la valeur des incréments (I) et, le cas échéant, la valeur des décréments (D), la position donnée du compteur et les valeurs limites (Max, Min) de chaque grandeur à surveiller peuvent être présélectionnées.

6. Procédé selon l'une des revendications précédentes, **caractérisé par le fait que**, en présence de messages d'erreur (11, 12, 13) pour plusieurs grandeurs d'entrée, le nouveau contrôle anticipé de ces grandeurs d'entrée est effectué en suivant une liste de priorité fixée auparavant.

7. Dispositif permettant de supprimer les fausses alertes dans des systèmes de surveillance pour appareils électroniques, notamment pour les circuits comportant des capteurs dans les véhicules automobiles, où le dispositif comporte des compteurs (3) équipés de manière telle que chaque message d'erreur incrémente un compteur (3), où le dispositif comporte un déclencheur d'alarme (4) équipé de manière telle qu'une alarme n'est déclenchée que lorsque au moins un des compteurs (3) atteint une position donnée dans chaque cas, **caractérisé par le fait que** le dispositif comporte un microprocesseur, sur lequel peut tourner un programme avec lequel des messages d'erreur (11, 12, 13) sont déduits lorsque l'une des grandeurs d'entrée à surveiller dépasse des valeurs limites (Max, Min) données spécialement pour chacune d'elles, que, en raison des messages d'erreur (11, 12, 13), le compteur (3) respectif est incrémenté par les messages d'erreur (11, 12, 13), alors que la position du compteur est contrôlée quant à la présence d'au moins un message d'erreur et que, dans ce cas, un nouveau contrôle de la valeur d'entrée concernée est effectué d'une façon anticipée.
